# EUROPEAN PATENT APPLICATION

(11) **EP 4 838 368 A1**
(43) Date of publication of application: **11.11.2026**
(21) Application number: 25752541.0
(22) Date of filing: 06.02.2025
(51) Int. Cl.: G06F 12/02, G06F 3/06

(54) **ELECTRONIC DEVICE AND MEMORY MANAGEMENT METHOD**

(30) Priority: 07.02.2024 KR 20240018881
(71) Applicant: Samsung Electronics Co., Ltd., Suwon-si, Gyeonggi-do 16677 (KR)
(72) Inventor: LIM, Jihyuk, Suwon-si, Gyeonggi-do 16677 (KR); HAN, Chankyu, Suwon-si, Gyeonggi-do 16677 (KR); HWANG, Chiyang, Suwon-si, Gyeonggi-do 16677 (KR)
(74) Representative: Gulde & Partner
(86) International application number: PCT/KR2025/099317
(87) International publication number: WO 2025/170448

(57) **Abstract**

An electronic device according to an embodiment of the disclosure comprises: a processor; and a memory storing instructions, wherein the instructions, when executed by the processor, enable the electronic device to: when there is a memory allocation request from a process, check whether all specific bits of a pointer are available; when at least some of the specific bits of the pointer are unavailable, check whether a selectable tag is present in a lookup table including indices of tags; when the selectable tag is present, select the tag; on the basis of the selected tag, configure a 3-tuple on the basis of a start address, an end address, and valid information for memory allocation and store the 3-tuple in the lookup table; set an operation bit to a first bit; store the tag and the operation bit in a first area of the pointer; and store the start address in a second area of the pointer to allocate a memory.

## Description

### Technical Field

The disclosure relates to an electronic device and a memory management method.

### Background Art

Memory safety refers to a computing environment that describes the safe use and management of a memory by the programming language or operating system. Memory management refers to the process of correctly using and releasing a memory dynamically allocated by a program, and through this process, memory safety aims to protect against various bugs and security vulnerabilities that may occur.

Due to a memory safety bug, a problem may occur in which an unnecessary memory is continuously occupied when data is written beyond the allocated size of an array and a released memory is referenced.

The above-described information may be provided as background technology (related art) to aid in understanding the disclosure. No claim or determination is made as to whether any of the above is applicable as prior art related to the disclosure.

### Disclosure of Invention

### Technical Problem

An electronic device according to an embodiment of the disclosure may include a processor.

An electronic device according to an embodiment of the disclosure may include a memory storing instructions.

The instructions, when executed by the processor, cause the electronic device to identify whether all specific bits of a pointer are available when there is a memory allocation request from a process.

The instructions, when executed by the processor, cause the electronic device to identify whether there is a selectable tag in a lookup table including indices of tags when at least some of the specific bits of the pointer are unavailable.

The instructions, when executed by the processor, cause the electronic device to select the tag when there is a selectable tag.

The instructions, when executed by the processor, cause the electronic device to, based on the selected tag, configure a 3-tuple based on a start address, an end address, and valid information for memory allocation and store the 3-tuple in the lookup table.

The instructions, when executed by the processor, cause the electronic device to set an operation bit to a first bit.

The instructions, when executed by the processor, cause the electronic device to store the tag and the operation bit in a first area of the pointer and store the start address in a second area of the pointer to allocate memory.

A memory management method according to an embodiment of the disclosure may include identifying whether all specific bits of a pointer are available when there is a memory allocation request from a process.

A memory management method according to an embodiment of the disclosure may include identifying whether there is a selectable tag in a lookup table including indices of tags when at least some of the specific bits of the pointer are unavailable.

A memory management method according to an embodiment of the disclosure may include selecting the tag when there is a selectable tag.

A memory management method according to an embodiment of the disclosure may include, based on the selected tag, configuring a 3-tuple based on a start address, an end address, and valid information for memory allocation and storing the 3-tuple in the lookup table.

A memory management method according to an embodiment of the disclosure may include setting an operation bit to a first bit; and storing the tag and the operation bit in a first area of the pointer and storing the start address in a second area of the pointer to allocate memory.

### Brief Description of Drawings

With regard to the description of the drawings, the same or like reference numerals may be used for the same or like elements.
FIG. 1 is a block diagram of an electronic device in a network environment according to various embodiments of the disclosure.
FIG. 2 is a diagram illustrating an electronic device according to an embodiment of the disclosure.
FIG. 3 is a diagram illustrating a memory safety violation detection module according to an embodiment of the disclosure.
FIG. 4 is a diagram illustrating a memory management method of an electronic device according to an embodiment of the disclosure.
FIG. 5 is a diagram illustrating a first memory management method according to an embodiment of the disclosure.
FIG. 6 is a diagram illustrating a second memory management method according to an embodiment of the disclosure.
FIG. 7 is a diagram specifically illustrating operation 601 of a second memory management method according to an embodiment of the disclosure.

### Mode for the Invention

An electronic device and a memory management method according to an embodiment of the disclosure are intended to efficiently and securely detect a memory safety bug based on the number of allocated memories.

An electronic device and a memory management method according to an embodiment of the disclosure may improve detection performance and security by detecting a memory safety bug based on the number of allocated memories.

Hereinafter, embodiments of the disclosure will be described in detail with reference to the accompanying drawings so that a person having ordinary skill in the art to which the disclosure pertains may easily carry out the disclosure. However, the disclosure may be embodied in various different forms and is not limited to the embodiments described herein. In connection with the description of the drawings, the same or similar reference numerals may be used for the same or similar components. In addition, in the drawings and the related description, descriptions of well-known functions and configurations may be omitted for the sake of clarity and conciseness.

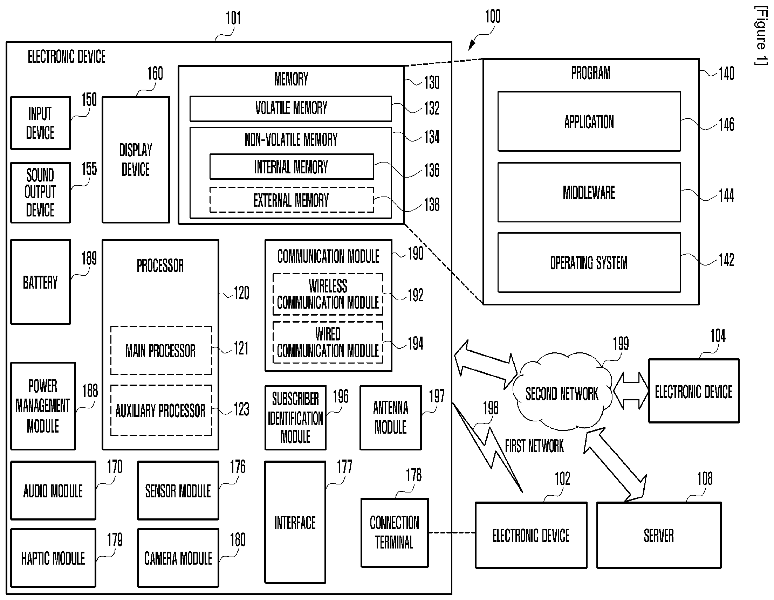

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

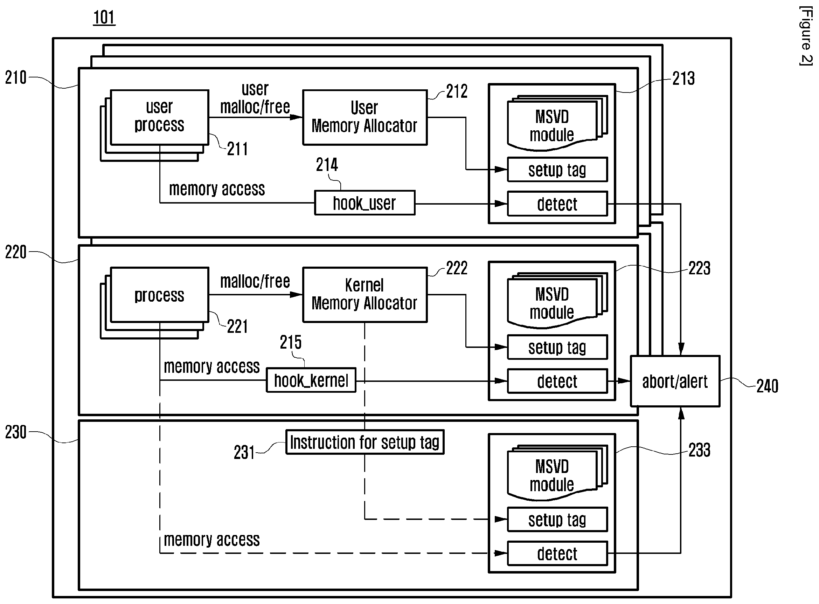

FIG. 2 is a diagram illustrating an electronic device 101 according to an embodiment of the disclosure.

In an embodiment, the electronic device 101 may include a first level 210, a second level 220, and a hardware layer 230. The first level 210 and the second level 220 may include an access authority level to the system resources. The second level 220 may have a higher access authority level to the system resources than the first level 210.

In an embodiment, the first level 210 may include a user framework. The electronic device 101, under the control of the processor 120, may execute an application code and a user space code in the first level 210 or in the user framework. The electronic device 101, under the control of the processor 120, may have access to the system resources restricted at the first level 210.

In an embodiment, the second level 220 may include at least one of a kernel, an Arm TrustZone operating system (e.g., TEEgris, QTEE Secure Enclave), a virtual machine (e.g., Android virtual framework), or a secure element (e.g., eSE, Apple Secure Enclave).

In an embodiment, under the control of the processor 120, the electronic device 101 may execute a kernel of an operating system at the second level 220. The electronic device 101, under the control of the processor 120, may perform system calls and exception handling at the second level 220.

In an embodiment, the first level 210 may include a user process 211, a first memory allocator 212, a first memory safety violation detection module 213, and a first hook function 214.

In an embodiment, the second level 220 may include a process 221 (e.g., a kernel process), a second memory allocator 222, a second memory safety violation detection module 223, and a second hook function 215.

In an embodiment, the hardware layer 230 may include an instruction 231 for tag setup and a third memory safety violation detection module 233.

In an embodiment, when the user process 211 requests memory allocation and release, the electronic device 101 may request, under the control of the processor 120, the first memory safety violation detection module 213 to perform tag setup and/or release operations through the first memory allocator 212.

In an embodiment, when the user process 211 requests memory access, whether a violation in relation to memory safety is detected based on the first hook function 214.

In an embodiment, when the process 221 requests memory allocation and release, the electronic device 101 may request, under the control of the processor 120, the second memory safety violation detection module 223 to perform tag setup and/or release operations through the second memory allocator 222.

In an embodiment, when the process 221 requests memory allocation and release, the electronic device 101 may request, under the control of the processor 120, the third memory safety violation detection module 233 to perform tag setup and/or release operations through the instruction 231 for tag setup.

In an embodiment, when the user process 211 requests memory access, whether a violation in relation to memory safety is detected based on the second hook function 215.

In an embodiment, when the user process 211 requests memory access, whether a violation in relation to memory safety is detected based on the third memory safety violation detection module 233.

In an embodiment, when a memory safety violation is detected by the first memory safety violation detection module 213, the second memory safety violation detection module 223, or the third memory safety violation detection module 233, the electronic device 101 may perform an abort/alert 240 operation regarding the memory safety violation under the control of the processor 120.

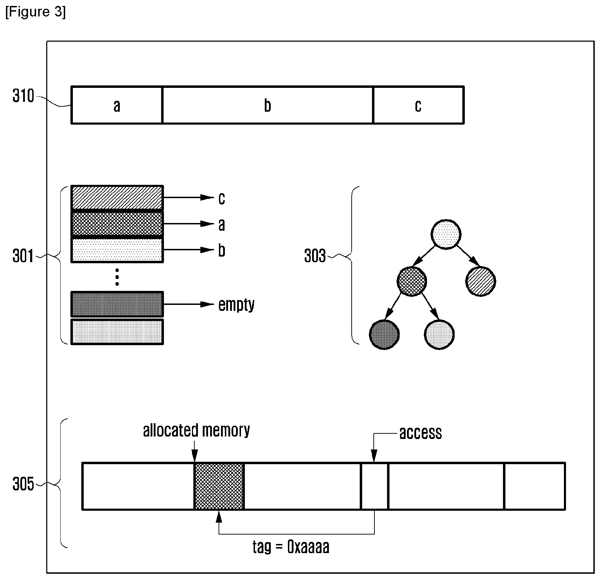

FIG. 3 is a diagram illustrating a memory safety violation detection module according to an embodiment of the disclosure.

In an embodiment, the memory safety violation detection module may include the first memory safety violation detection module 213, the second memory safety violation detection module 223, or the third memory safety violation detection module 233.

In an embodiment, the memory safety violation detection module may manage all allocated memories 310 as 3-tuple. A tuple may include a data type in which multiple values are grouped together to express a single immutable sequence in programming. The memory safety violation detection module may manage the allocated memory 310 as a tuple defined in three types: a start address, an end address, or additional data. The additional data may include, for example, a tag, valid information, or various types of information.

In an embodiment, the memory safety violation detection module may include a 3-tuple lookup table 301, a 3-tuple dynamic data structure 303, and/or a header structure 305 including a 3-tuple.

In an embodiment, the 3-tuple lookup table 301 may include a tag as an index. The 3-tuple lookup table 301 may include, for example, a start address, an end address, or a tag for an allocated memory having a specific tag (a) as a 3-tuple. Therefore, the 3-tuple lookup table 301 may not additionally include tag information. The 3-tuple lookup table 301 may include valid information for validity verification. For example, if the valid information is 0, the corresponding 3-tuple may indicate that it is empty. If the valid information is 1, the corresponding 3-tuple may indicate that it is stored.

The tag storage may include the 3-tuple lookup table 301.

In an embodiment, the 3-tuple dynamic data structure 303 may include multiple distributed trees.

In an embodiment, the 3-tuple dynamic data structure 303 may include a data structure having an address range (e.g., a start address and an end address) as a key and the 3-tuple as a value.

In an embodiment, the header structure 305 including a 3-tuple may include a structure in which the 3-tuple is stored in a header. For example, the header structure 305 including a 3-tuple may configure the 3-tuple based on a start address, an end address, and tag information for memory allocation and save the same in the header area. The header structure 305 including a 3-tuple may allocate memory by designating the location of the header area as a base address and designating the start address by adding a random offset value to the base address.

For example, when a request for memory access to a specific address is made, the electronic device 101, under the control of the processor 120, may search for a 3-tuple for the specific address through the memory safety violation detection module and return a tag value. When a request for memory access to a specific address is made, the electronic device 101, under the control of the processor 120, may determine that there is a memory safety violation if there is no 3-tuple is found for the specific address through the memory safety violation detection module.

In an embodiment, the electronic device 101, under the control of the processor 120, may allocate/release memory based on the 3-tuple lookup table 301, the 3-tuple dynamic data structure 303, and/or the header structure including a 3-tuple, and determine whether there is a memory safety violation when accessing the memory.

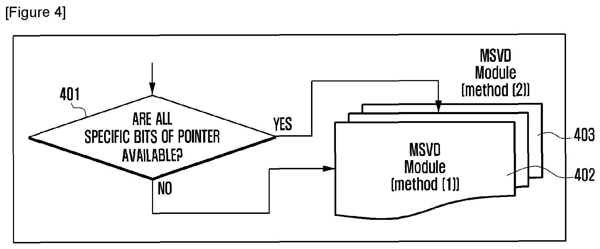

FIG. 4 is a diagram illustrating a memory management method of an electronic device 101 according to an embodiment of the disclosure.

In an embodiment, when there is a request for memory allocation, release, or access, the electronic device 101, under the control of the processor 120, may determine whether all specific bits of the pointer are available in operation 401.

In an embodiment, the memory 130 may include instructions. The instructions, when executed by the processor 120, may cause the electronic device to perform a memory management method.

In an embodiment, when there is a request for memory allocation, release, or access, the instructions stored in the memory 130, when executed by the processor 120, may cause the electronic device 101 to determine whether all specific bits of the pointer are available in operation 401.

In an embodiment, if some of the specific bits of the pointer are not available, the electronic device 101, under the control of the processor 120, may manage memory allocation, release, or access by using a first memory management method 402. The memory safety violation detection module (e.g., the first memory safety violation detection module 213, the second memory safety violation detection module 223, or the third memory safety violation detection module 233) may include the first memory management method 402.

In an embodiment, if some of the specific bits of the pointer are not available, the instructions stored in the memory 130, when executed by the processor 120, may cause the electronic device 101 to manage memory allocation, release, or access by using the first memory management method 402.

In an embodiment, if all specific bits of the pointer are available, the electronic device 101, under the control of the processor 120, may manage memory allocation, release, or access by using a second memory management method 403. The memory safety violation detection module (e.g., the first memory safety violation detection module 213, the second memory safety violation detection module 223, or the third memory safety violation detection module 233) may include the second memory management method 403.

In an embodiment, if all specific bits of the pointer are available, the instructions stored in the memory 130, when executed by the processor 120, may cause the electronic device 101 to manage memory allocation, release, or access by using the second memory management method 403.

For example, a specific bit of a pointer may include the upper 16 bits of the pointer. For example, if the electronic device 101 is using any one of the functions of pointer authentication codes (PACs) and/or memory tagging extension (MTE), the electronic device 101 can not use at least some of specific bits of the pointer.

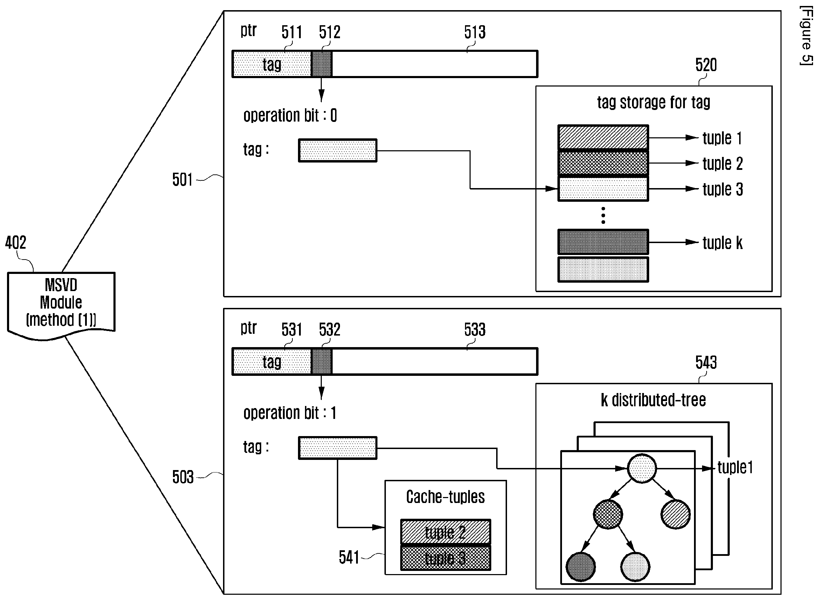

FIG. 5 is a diagram illustrating a first memory management method 402 according to an embodiment of the disclosure.

In an embodiment, the memory safety violation detection module (e.g., the first memory safety violation detection module 213, the second memory safety violation detection module 223, or the third memory safety violation detection module 233) may include the first memory management method 402.

Referring to 501, the electronic device 101, under the control of the processor 120, may manage a pointer as tag areas 511 and 512 and an address area 513. Under the control of the processor 120, the electronic device 101 may define a pointer as tag areas 511 and 512 and the address area 513. The tag areas 511 and 512 may include the lowest bit in the tag area as an operation bit 512. The tag area may include the remaining bits excluding the operation bit 512 as the tag 511.

In an embodiment, the instructions stored in the memory 130, when executed by the processor 120, may cause the electronic device 101 to manage the pointer as tag areas 511 and 512 and the address area 513. The instructions stored in the memory 130, when executed by the processor 120, may cause the electronic device 101 to define the pointer as tag areas 511 and 512 and the address area 513.

Referring to 503, the electronic device 101, under the control of the processor 120, may manage a pointer as tag areas 531 and 532 and an address area 533. Referring to 503, the electronic device 101, under the control of the processor 120, may define a pointer as tag areas 531 and 532 and the address area 533. The tag areas 531 and 532 may include the lowest bit in the tag area as an operation bit 532. The tag area may include the remaining bits excluding the operation bit 532 as the tag 531.

In an embodiment, the instructions stored in the memory 130, when executed by the processor 120, may cause the electronic device 101 to manage the pointer as tag areas 531 and 532 and the address area 533. The instructions stored in the memory 130, when executed by the processor 120, may cause the electronic device 101 to define the pointer as tag areas 531 and 532 and the address area 533.

In an embodiment, if there is an index capable of storing a 3-tuple in a 3-tuple lookup table 520, the electronic device 101, under the control of the processor 120, may set the operation bits 512 and 532 to a first bit (e.g., "0").

In an embodiment, if there is an index capable of storing a 3-tuple in the 3-tuple lookup table 520, the instructions stored in the memory 130, when executed by the processor 120, may cause the electronic device 101 to set the operation bits 512 and 532 to the first bit (e.g., "0").

In an embodiment, if there is no index capable of storing a 3-tuple in the 3-tuple lookup table 520 (or if storing a 3-tuple is impossible), the electronic device 101, under the control of the processor 120, may set the operation bits 512 and 532 to a second bit (e.g., "1").

In an embodiment, if there is no index capable of storing a 3-tuple in the 3-tuple lookup table 520 (or if storing a 3-tuple is impossible), the instructions stored in the memory 130, when executed by the processor 120, may cause the electronic device 101 to set the operation bits 512 and 532 to the second bit (e.g., "1").

In an embodiment, the electronic device 101, under the control of the processor 120, may manage memory allocation, release, or access by using the 3-tuple lookup table 520 according to the operation bits 512 and 532.

In an embodiment, the instructions stored in the memory 130, when executed by the processor 120, may cause the electronic device 101 to manage memory allocation, release, or access by using the 3-tuple lookup table 520 according to the operation bits 512 and 532.

In an embodiment, when the operation bits 512 and 532 are set to the first bit, the electronic device 101, under the control of the processor 120, may manage memory allocation, release, or access by using the 3-tuple lookup table 520.

In an embodiment, when the operation bits 512 and 532 are set to the first bit, the instructions stored in the memory 130, when executed by the processor 120, may cause the electronic device 101 to manage memory allocation, release, or access by using the 3-tuple lookup table 520.

In an embodiment, the electronic device 101, under the control of the processor 120, may manage memory allocation, release, or access by using a cache tuple 541 and/or a 3-tuple dynamic data structure 543 according to the operation bits 512 and 532.

In an embodiment, the instructions stored in the memory 130, when executed by the processor 120, may cause the electronic device 101 to manage memory allocation, release, or access by using the cache tuple 541 and/or the 3-tuple dynamic data structure 543 according to the operation bits 512 and 532.

In an embodiment, when the operation bits 512 and 532 are set to the second bit, the electronic device 101, under the control of the processor 120, may manage memory allocation, release, or access by using the cache tuple 541 and/or the 3-tuple dynamic data structure 543.

In an embodiment, when the operation bits 512 and 532 are set to the second bit, the instructions stored in the memory 130, when executed by the processor 120, may cause the electronic device 101 to manage memory allocation, release, or access by using the cache tuple 541 and/or the 3-tuple dynamic data structure 543.

In an embodiment, the cache-tuple 541 may include a data table. The cache tuple 541 may store 3-tuple information in which the operation bits 512 and 532 are set to the second bit within a predetermined time. The cache tuple 541 may store 3-tuple information in a data table. The size of the data table may be expandable as much as parallel scale of the system.

In an embodiment, the 3-tuple dynamic data structure 543 may include multiple distributed trees. The number of distributed trees may include a divisor value of the number in the case of a tag. For example, if the number of the multiple distributed trees is K (K is an integer equal to or greater than 1), the electronic device 101, under the control of the processor 120, may manage the 3-tuple to be managed into K groups. The electronic device 101, under the control of the processor 120, may determine one of the multiple distributed trees based on the tag and perform operations of adding, searching, and deleting the 3-tuple in the corresponding distributed tree.

Referring to 501, when there is a memory allocation request from a process, the electronic device 101, under the control of the processor 120, may identify whether there is a selectable tag in the lookup table including an index for the tag. The lookup table may include a 3-tuple lookup table.

Referring to 501, when there is a memory allocation request from a process, the instructions stored in the memory 130, when executed by the processor 120, may cause the electronic device 101 to identify whether there is a selectable tag in the lookup table including an index for the tag.

Referring to 501, if there is a selectable tag in the lookup table, the electronic device 101, under the control of the processor 120, may select the tag. The tag may be randomly generated in advance.

Referring to 501, based on the selectable tag, the electronic device 101, under the control of the processor 120, may configure a 3-tuple based on a start address, an end address, and valid information for memory allocation and store the 3-tuple in the lookup table. The valid information may indicate, for example, that the 3-tuple is valid if "1" and indicate that the 3-tuple is invalid if "0". When a 3-tuple is configured and stored in the lookup table, the valid information may be set to 1.

Referring to 501, the instructions stored in the memory 130, when executed by the processor 120, may cause the electronic device 101 to configure a 3-tuple based on a start address, an end address, and valid information for memory allocation and store the 3-tuple in the lookup table.

Referring to 501, when the 3-tuple is configured and stored in in the lookup table, the electronic device 101, under the control of the processor 120, may set the operation bit to the first bit (e.g., "0").

Referring to 501, when the 3-tuple is configured and stored in in the lookup table, the instructions stored in the memory 130, when executed by the processor 120, may cause the electronic device 101 to set the operation bit to the first bit.

Referring to 501, the electronic device 101, under the control of the processor 120, may store a selected tag and an operation bit set to the first bit in the first area of the pointer and store a start address in the second area of the pointer to allocate memory.

Referring to 501, the instructions stored in the memory 130, when executed by the processor 120, may cause the electronic device 101 to store a selected tag and an operation bit set to the first bit in the first area of the pointer and store a start address in the second area of the pointer to allocate memory.

Referring to 503, if there is no selectable tag in the lookup table, the electronic device 101, under the control of the processor 120, may reselect a random tag.

Referring to 503, if there is no selectable tag in the lookup table, the instructions stored in the memory 130, when executed by the processor 120, may cause the electronic device 101 to reselect a random tag.

Referring to 503, based on the selected tag, the electronic device 101, under the control of the processor 120, may configure and store a 3-tuple based on a start address, an end address, and a randomly selected tag for memory allocation and store the 3-tuple in a specific tree.

Referring to 503, based on the selected tag, the instructions stored in the memory 130, when executed by the processor 120, may cause the electronic device 101 to configure and store a 3-tuple based on a start address, an end address, and a randomly selected tag for memory allocation and store the 3-tuple in a specific tree.

For example, if the number of the multiple distributed trees is K (K is an integer equal to or greater than 1), the electronic device 101, under the control of the processor 120, may store the 3-tuple in the R^{th} distributed tree, which is the remainder of dividing the tag value by K.

Referring to 503, when the 3-tuple is stored in a specific tree, the electronic device 101, under the control of the processor 120, may set an operation bit to the second bit (e.g., "1").

Referring to 503, when the 3-tuple is stored in a specific tree, the instructions stored in the memory 130, when executed by the processor 120, may cause the electronic device 101 to set an operation bit to the second bit (e.g., "1").

Referring to 503, when the 3-tuple is stored in a specific tree, the electronic device 101, under the control of the processor 120, may set an operation bit to the second bit (e.g., "1"), store the tag and the operation bit in the first area of the pointer, and store the start address in the second area of the pointer, thereby allocating memory.

Referring to 503, when the 3-tuple is stored in a specific tree, the instructions stored in the memory 130, when executed by the processor 120, may cause the electronic device 101 to set an operation bit to the second bit (e.g., "1"), store the tag and the operation bit in the first area of the pointer, and store the start address in the second area of the pointer, thereby allocating memory.

Referring to 501, when a process or a pointer attempts to access a specific memory address, the electronic device 101, under the control of the processor 120, may identify the operation bit of the pointer.

Referring to 501, when a process or a pointer attempts to access a specific memory address, the instructions stored in the memory 130, when executed by the processor 120, may cause the electronic device 101 to identify the operation bit of the pointer.

Referring to 501, when a process or a pointer accesses a specific memory address, if the operation bit is set to the first bit (e.g., "0"), the electronic device 101, under the control of the processor 120, may identify whether the specific memory address corresponds to a start address and an end address for memory allocation and valid information based on the 3-tuple stored in the lookup table, and determine whether there is a memory safety violation.

Referring to 501, if the operation bit is set to the first bit (e.g., "0"), the instructions stored in the memory 130, when executed by the processor 120, may cause the electronic device 101 to identify whether the specific memory address corresponds to the start address and the end address for memory allocation and valid information based on the 3-tuple stored in the lookup table, and determine whether there is a memory safety violation.

Referring to 501, when a process or a pointer accesses a specific memory address, if the operation bit is set to the first bit (e.g., "0"), the electronic device 101, under the control of the processor 120, may identify a tag value included in the pointer and identify a 3-tuple corresponding to the tag value in the lookup table. Referring to 501, the 3-tuple may include a start address, an end address, and validity information. The electronic device 101, under the control of the processor 120, may identify whether the address of the pointer or the processor that requested access corresponds to the start address and the end address included in the 3-tuple.

Referring to 501, if the address of the pointer or the processor that requested access corresponds to the start address and the end address included in the 3-tuple and the valid information included in the 3-tuple is valid, the electronic device 101, under the control of the processor 120, may allow the process or the pointer to access a specific memory address. If the address of the pointer or the processor that requested access does not correspond to the start address and the end address included in the 3-tuple or the valid information included in the 3-tuple is invalid, the electronic device 101, under the control of the processor 120, may determine that there is a memory safety violation.

Referring to 501, when a process or a pointer accesses a specific memory address, if the operation bit is set to the first bit (e.g., "0"), the instructions stored in the memory 130, when executed by the processor 120, may cause the electronic device 101 to identify a tag value included in the pointer and identify a 3-tuple corresponding to the tag value in the lookup table.

Referring to 501, if the address of the pointer or the processor that requested access corresponds to the start address and the end address included in the 3-tuple and the valid information included in the 3-tuple is valid, the instructions stored in the memory 130, when executed by the processor 120, may cause the electronic device 101 to allow the process or the pointer to access a specific memory address. If the address of the pointer or the processor that requested access does not correspond to the start address and the end address included in the 3-tuple or the valid information included in the 3-tuple is invalid, the instructions stored in the memory 130, when executed by the processor 120, may cause the electronic device 101 to determine that there is a memory safety violation.

Referring to 503, when a pointer attempts to access a specific memory address, the electronic device 101, under the control of the processor 120, may identify the operation bit of the pointer.

Referring to 503, when a process or a pointer accesses a specific memory address, if the operation bit is set to the second bit (e.g., "1"), the electronic device 101, under the control of the processor 120, may determine whether there is a memory safety violation by whether the start address and the end address for the tag and memory allocation correspond to the cache tuple 541.

Referring to 503, when a process or a pointer accesses a specific memory address, if the start address and the end address for the tag and memory allocation do not correspond to the cache tuple 541, the electronic device 101, under the control of the processor 120, may determine whether there is a memory safety violation by whether the start address and the end address for tag and memory allocation correspond to the 3-tuple dynamic data structure 543 including a specific tree.

Referring to 503, the instructions stored in the memory 130, when executed by the processor 120, may cause the electronic device 101 to identify the operation bit of the pointer.

Referring to 503, when a process or a pointer accesses a specific memory address, if the operation bit is set to the second bit (e.g., "1"), the instructions stored in the memory 130, when executed by the processor 120, may cause the electronic device 101 to determine whether there is a memory safety violation by whether the start address and the end address for the tag and memory allocation correspond to the cache tuple 541.

Referring to 503, when a process or a pointer accesses a specific memory address, if the start address and the end address for the tag and memory allocation do not correspond to the cache tuple 541, the instructions stored in the memory 130, when executed by the processor 120, may cause the electronic device 101 to determine whether there is a memory safety violation by whether the start address and the end address for tag and memory allocation correspond to the 3-tuple dynamic data structure 543 including a specific tree.

Referring to 501, the electronic device 101, under the control of the processor 120, may identify the operation bit of the pointer when a request is made to release a specific memory address from the process or the pointer.

Referring to 501, the instructions stored in the memory 130, when executed by the processor 120, may cause the electronic device 101 to identify the operation bit of the pointer when a request is made to release a specific memory address from the process or the pointer.

Referring to 501, when a request is made to release a specific memory address from the process or the pointer, if the identified operation bit is set to the first bit (e.g., "0"), the electronic device 101, under the control of the processor 120, may identify whether the specific memory address corresponds to the start address and the end address for memory allocation and identify valid information based on the 3-tuple stored in the lookup table, and may release memory usage by changing the valid information to invalid (e.g., "0).

Referring to 501, when a request is made to release a specific memory address from the process or the pointer, if the identified operation bit is set to the first bit (e.g., "0"), the instructions stored in the memory 130, when executed by the processor 120, may cause the electronic device 101 to identify whether the specific memory address corresponds to the start address and the end address for memory allocation and identify valid information based on the 3-tuple stored in the lookup table, and may release memory usage by changing the valid information to invalid (e.g., "0).

Referring to 503, when a request is made to release a specific memory address from the process or the pointer, if the identified operation bit is set to the second bit (e.g., "1"), the electronic device 101, under the control of the processor 120, may change the 3-tuple stored in the cache tuple 541 to specific data (e.g., (0, 0, 0)) based on the start address, end address and tag for memory allocation.

Referring to 503, when a request is made to release a specific memory address from the process or the pointer, if the identified operation bit is set to the second bit (e.g., "1"), the instructions stored in the memory 130, when executed by the processor 120, may cause the electronic device 101 to change the 3-tuple stored in the cache tuple 541 to specific data (e.g., (0, 0, 0)) based on the start address, end address and tag for memory allocation.

Referring to 503, when a request is made to release a specific memory address from the process or the pointer, if the identified operation bit is set to the second bit (e.g., "1"), the electronic device 101, under the control of the processor 120, may search for a specific tree corresponding to the tag and delete the 3-tuple stored in the specific tree.

Referring to 503, when a request is made to release a specific memory address from the process or the pointer, if the identified operation bit is set to the second bit (e.g., "1"), the instructions stored in the memory 130, when executed by the processor 120, may cause the electronic device 101 to search for a specific tree corresponding to the tag and delete the 3-tuple stored in the specific tree.

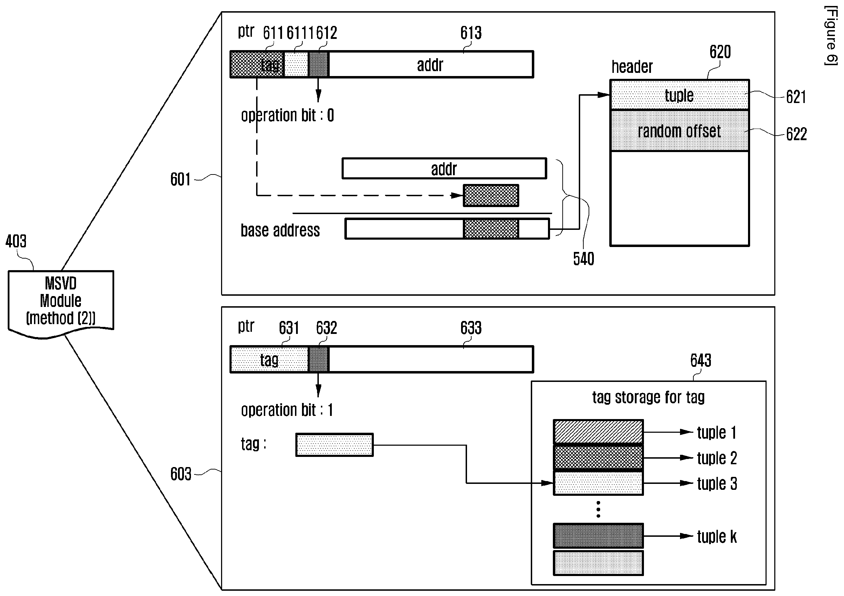

FIG. 6 is a diagram illustrating a second memory management method 403 according to an embodiment of the disclosure.

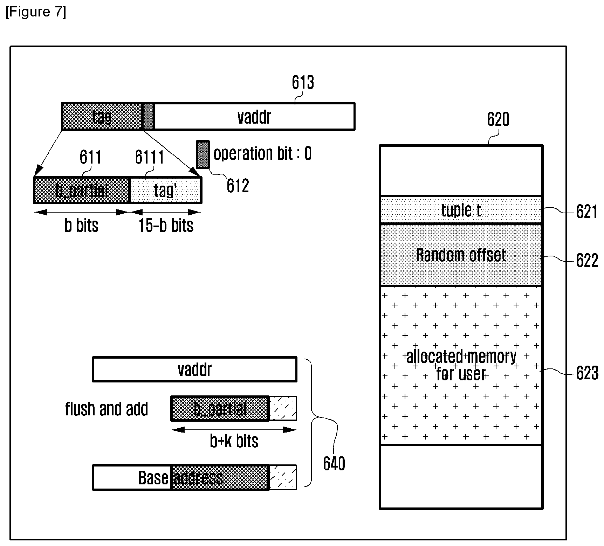

FIG. 7 is a diagram specifically illustrating operation 601 of a second memory management method 403 according to an embodiment of the disclosure.

In an embodiment, the memory safety violation detection module (e.g., the first memory safety violation detection module 213, the second memory safety violation detection module 223, or the third memory safety violation detection module 233) may include the second memory management method 403.

Referring to 601 of FIG. 6 and 601 of FIG. 7, the electronic device 101, under the control of the processor 120, may manage a pointer as tag areas 611, 6111, and 612 and an address area 613.

Referring to 601 of FIG. 6 and 601 of FIG. 7, the electronic device 101, under the control of the processor 120, may store tag information in the tag areas 611, 6111, and 612 of the pointer. The tag information 611 and 6111, excluding the operation bit 612, may include first tag information 611 and second tag information 6111. For example, when the size of the tag areas 611, 6111, and 612 is 16 bits, 15 bits except for the operation bit 612 may be used as tag information 611 and 6111. For example, when the size of the first tag information 611 includes b bits, the size of the second tag information 6111 may include 15-b bits.

The first tag information 611 may include a base address in which a header is stored, and the second tag information 6111 may include actual tag information.

Referring to 601 of FIG. 6 and 601 of FIG. 7, the electronic device 101, under the control of the processor 120, may determine a location of a header in an address by using a random offset. The offset may include a value indicating a relative location in a memory address. The disclosure may improve security by randomly defining the location of the header in the address.

For example, the size of the random number of the random offset may include m bits, and the size of the alignment of the address in which the tag areas 611, 6111, and 612 are to be stored may include k bits. The size of the random offset may be determined as the product of 2^{m} and 2^{k}. In this case, the maximum size of the random offset size may include 2^{(m+k)}.

Referring to 601 of FIG. 6 and 601 of FIG. 7, the electronic device 101, under the control of the processor 120, may determine the location of first tag information 611 in the memory address or the pointer 613 based on an alignment size of an address in which the tag areas 611, 6111, and 612 are stored, in the base address in which a header is stored. For example, if the alignment size of the address in which the tag areas 611, 6111, and 612 are to be stored is k bits, the first tag information 611 may be located from the kth bit to the (b+k-1)^{th} bit of the memory address or the pointer 613. For example, when a process or a pointer accesses a specific memory address, the k^{th} bit to the (b+k-1)^{th} bit of the memory address or the pointer 613 may be filled with the first tag information 611, and the remaining bits may be filled with 0, thereby enabling the tag areas 611, 6111, and 612 to be searched or detected. However, the addresses of the tag areas 611, 6111, and 612 may have a limited recoverable memory size due to the limitation of the memory address size. The recoverable memory size may include a specific size. For example, a specific size may include 2^{(b+k)}.

Referring to 603, the electronic device 101, under the control of the processor 120, may manage a pointer as tag areas 631 and 632 and an address area 633. The electronic device 101, under the control of the processor 120, may define the pointer as tag areas 631 and 632 and the address area 633. The tag areas 631 and 632 and the address area 633 may include the lowest bit in the tag area as an operation bit 632. The tag area may include the remaining bits excluding the operation bit 632 as the tag 631.

In an embodiment, the instructions stored in the memory 130, when executed by the processor 120, may cause the electronic device 101 to manage the pointer as tag areas 631 and 632 and the address area 633. The instructions stored in the memory 130, when executed by the processor 120, may cause the electronic device 101 to define the pointer as tag areas 631 and 632 and the address area 633.

In an embodiment, the electronic device 101, under the control of the processor 120, may identify whether the sum of the memory allocation size and the random offset size is smaller than a specific size.

In an embodiment, if the sum of the memory allocation size and the random offset size is smaller than a specific size, the electronic device 101, under the control of the processor 120, may set the operation bits 612 and 632 to the first bit (e.g., "0"). The memory allocation size may include the alignment size of the address where the tag areas 611, 6111, and 612 are to be stored.

In an embodiment, if the sum of the memory allocation size and the random offset size is smaller than a specific size, the instructions stored in the memory 130, when executed by the processor 120, may cause the electronic device 101 to set the operation bits 612 and 632 to the first bit (e.g., "0").

In an embodiment, if the sum of the memory allocation size and the random offset size is greater than or equal to a specific size, the electronic device 101, under the control of the processor 120, may set the operation bits 612 and 632 to the second bit (e.g., "1").

In an embodiment, if the sum of the memory allocation size and the random offset size is greater than or equal to a specific size, the instructions stored in the memory 130, when executed by the processor 120, may cause the electronic device 101 to set the operation bits 612 and 632 to the second bit (e.g., "1").

In an embodiment, the electronic device 101, under the control of the processor 120, may manage memory allocation, release, or access by using the 3-tuple lookup table 643 according to the operation bits 612 and 632.

In an embodiment, the instructions stored in the memory 130, when executed by the processor 120, may cause the electronic device 101 to manage memory allocation, release, or access by using the 3-tuple lookup table 643 according to the operation bits 612 and 632.

In an embodiment, if the operation bits 612 and 632 are set to the second bit, the electronic device 101, under the control of the processor 120, may manage memory allocation, release, or access by using the 3-tuple lookup table 643.

In an embodiment, if the operation bits 612 and 632 are set to the second bit, the instructions stored in the memory 130, when executed by the processor 120, may cause the electronic device 101 to manage memory allocation, release, or access by using the 3-tuple lookup table 643.

Referring to 601 of FIG. 6 and 601 of FIG. 7, if the sum of the memory allocation size and the random offset size is smaller than a specific size, the electronic device 101, under the control of the processor 120, may set the operation bit 612 to the first bit (e.g., "0"), configure a 3-tuple based on the start address, the end address, and second tag information 6111 for memory allocation and store the 3-tuple in the header area, and allocate memory by designating the location of the header area as a base address and designating the start address as the start address by adding a random offset value to the base address.

Referring to 601 of FIG. 6 and 601 of FIG. 7, if the sum of the memory allocation size and the random offset size is smaller than a specific size, the instructions stored in the memory 130, when executed by the processor 120, may cause the electronic device 101 to set the operation bit 612 to the first bit (e.g., "0"), configure a 3-tuple based on the start address, the end address, and second tag information 6111 for memory allocation and store the 3-tuple in the header area, and allocate memory by designating the location of the header area as a base address and designating the start address as the start address by adding a random offset value to the base address.

Referring to 603, if the sum of the memory allocation size and the random offset size is greater than or equal to a specific size, the electronic device 101, under the control of the processor 120, may set the operation bit 632 to the second bit (e.g., "1").

Referring to 603, if the sum of the memory allocation size and the random offset size is greater than or equal to a specific size, the instructions stored in the memory 130, when executed by the processor 120, may cause the electronic device 101 to set the operation bit 632 to the second bit (e.g., "1").

Referring to 603, based on the selectable tag 631, the electronic device 101, under the control of the processor 120, may configure a 3-tuple based on the start address, the end address, and valid information for memory allocation and allocate memory.

Referring to 603, based on the selectable tag 631, the instructions stored in the memory 130, when executed by the processor 120, may cause the electronic device 101 to configure a 3-tuple based on the start address, the end address, and valid information for memory allocation and allocate memory.

Referring to 603, based on the selectable tag 631, the electronic device 101, under the control of the processor 120, may configure a 3-tuple based on the start address, the end address, and valid information for memory allocation and store the 3-tuple in the lookup table 643.

Referring to 603, based on the selectable tag 631, the instructions stored in the memory 130, when executed by the processor 120, may cause the electronic device 101 to configure a 3-tuple based on the start address, the end address, and valid information for memory allocation and store the 3-tuple in the lookup table 643.

Referring to 601 of FIG. 6 and 601 of FIG. 7, when a pointer attempts to access a specific memory address, the electronic device 101, under the control of the processor 120, may identify the operation bit of the pointer.

Referring to 601 of FIG. 6 and 601 of FIG. 7, when a pointer attempts to access a specific memory address, the instructions stored in the memory 130, when executed by the processor 120, may cause the electronic device 101 to identify the operation bit of the pointer.

Referring to 601 of FIG. 6 and 601 of FIG. 7, if the operation bit is set to the first bit (e.g., "0"), the electronic device 101, under the control of the processor 120, may identify the location of the header area, identify whether a specific memory address corresponds to the start address and the end address for allocation of memory included in the header area, and identify the second tag information. The electronic device 101, under the control of the processor 120, may identify whether the specific memory address corresponds to the start address and the end address and whether the second tag information 6111 matches. The electronic device 101, under the control of the processor 120, may allow memory access if the specific memory address corresponds to the start address and the end address and the second tag information 6111 matches. The electronic device 101, under the control of the processor 120, may determine that there is a memory safety violation if the specific memory address does not correspond to the start address or the end address, or if the second tag information 6111 does not match.

Referring to 601 of FIG. 6 and 601 of FIG. 7, when a pointer attempts to access a specific memory address, if the operation bit is set to the first bit (e.g., "0"), the instructions stored in the memory 130, when executed by the processor 120, may cause the electronic device 101 to identify the location of the header area, identify whether the specific memory address corresponds to the start address and the end address for allocation of memory included in the header area, and identify the second tag information. The instructions stored in the memory 130, when executed by the processor 120, may cause the electronic device 101 to identify whether the specific memory address corresponds to the start address and the end address and whether the second tag information 6111 matches. The instructions stored in the memory 130, when executed by the processor 120, may cause the electronic device 101 to allow memory access if the specific memory address corresponds to the start address and the end address and the second tag information 6111 matches. The instructions stored in the memory 130, when executed by the processor 120, may cause the electronic device 101 to determine that there is a memory safety violation if the specific memory address does not correspond to the start address or the end address, or if the second tag information 6111 does not match.

Referring to 603, when a process or a pointer attempts to access a specific memory address, the electronic device 101, under the control of the processor 120, may identify the operation bit 632 of the pointer.

Referring to 603, when a process or a pointer attempts to access a specific memory address, the instructions stored in the memory 130, when executed by the processor 120, may cause the electronic device 101 to identify the operation bit 632 of the pointer.

Referring to 603, when a process or a pointer accesses a specific memory address, if the operation bit 632 is set to the second bit (e.g., "1"), the electronic device 101, under the control of the processor 120, may identify whether the specific memory address corresponds to a start address and an end address for memory allocation and valid information based on the 3-tuple stored in the lookup table, and determine whether there is a memory safety violation.

Referring to 603, when a process or a pointer accesses a specific memory address, if the operation bit 632 is set to the second bit (e.g., "1"), the instructions stored in the memory 130, when executed by the processor 120, may cause the electronic device 101 to identify whether the specific memory address corresponds to a start address and an end address for memory allocation and valid information based on the 3-tuple stored in the lookup table, and determine whether there is a memory safety violation.

Referring to 603, when a process or a pointer accesses a specific memory address, if the operation bit is set to the second bit (e.g., "1"), the electronic device 101, under the control of the processor 120, may identify a tag value included in the pointer and identify a 3-tuple corresponding to the tag value in the lookup table 643.

Referring to 603, the 3-tuple may include a start address, an end address, and validity information. The electronic device 101, under the control of the processor 120, may identify whether the address of the pointer or the processor that requested access corresponds to the start address and the end address included in the 3-tuple.

Referring to 603, if the address of the pointer or the processor that requested access corresponds to the start address and the end address included in the 3-tuple and the valid information included in the 3-tuple is valid, the electronic device 101, under the control of the processor 120, may allow the process or the pointer to access a specific memory address. If the address of the pointer or the processor that requested access does not correspond to the start address and the end address included in the 3-tuple or the valid information included in the 3-tuple is invalid, the electronic device 101, under the control of the processor 120, may determine that there is a memory safety violation.

Referring to 603, when a process or a pointer accesses a specific memory address, if the operation bit is set to the first bit (e.g., "0"), the instructions stored in the memory 130, when executed by the processor 120, may cause the electronic device 101 to identify a tag value included in the pointer and identify a 3-tuple corresponding to the tag value in the lookup table.

Referring to 603, if the address of the pointer or the processor that requested access corresponds to the start address and the end address included in the 3-tuple and the valid information included in the 3-tuple is valid, the instructions stored in the memory 130, when executed by the processor 120, may cause the electronic device 101 to allow the process or the pointer to access a specific memory address. If the address of the pointer or the processor that requested access does not correspond to the start address and the end address included in the 3-tuple or the valid information included in the 3-tuple is invalid, the instructions stored in the memory 130, when executed by the processor 120, may cause the electronic device 101 to determine that there is a memory safety violation.

Referring to 601 of FIG. 6 and 601 of FIG. 7, when a request is made to release a specific memory address from the process or the pointer, the electronic device 101, under the control of the processor 120, may identify the operation bit 612 of the pointer.

Referring to 601 of FIG. 6 and 601 of FIG. 7, when a request is made to release a specific memory address from the process or the pointer, if the operation bit is set to the first bit (e.g., "0"), the electronic device 101, under the control of the processor 120, may invalidate the valid information, based on the start address, end address, and second tag information 612 included in the header area. For example, the start address, the end address, and second tag information 612 may be changed to (0, 0, 0).

Referring to 601 of FIG. 6 and 601 of FIG. 7, when a request is made to release a specific memory address from the process or the pointer, if the operation bit is set to the first bit (e.g., "0"), the electronic device 101, under the control of the processor 120, may identify the first tag information 611 (e.g., a base address) to identify the location of the header area. The electronic device 101, under the control of the processor 120, may identify the start address, the end address, and second tag information 612 in the identified header area.

Referring to 601 of FIG. 6 and 601 of FIG. 7, when a request is made to release a specific memory address from the process or the pointer, the instructions stored in the memory 130, when executed by the processor 120, may cause the electronic device 101 to identify the operation bit 612 of the pointer.

Referring to 601 of FIG. 6 and 601 of FIG. 7, when a request is made to release a specific memory address from the process or the pointer, if the operation bit is set to the first bit (e.g., "0"), the instructions stored in the memory 130, when executed by the processor 120, may cause the electronic device 101 to invalidate the valid information, based on the start address, end address, and second tag information 612 included in the header area.

Referring to 601 of FIG. 6 and 601 of FIG. 7, when a request is made to release a specific memory address from the process or the pointer, if the operation bit is set to the first bit (e.g., "0"), the instructions stored in the memory 130, when executed by the processor 120, may cause the electronic device 101 to identify the first tag information 611 (e.g., a base address) to identify the location of the header area.

Referring to 603, when a request is made to release a specific memory address from the process or the pointer, the electronic device 101, under the control of the processor 120, may identify the operation bit 632 of the pointer.

Referring to 603, when a request is made to release a specific memory address from the process or the pointer, the instructions stored in the memory 130, when executed by the processor 120, may cause the electronic device 101 to identify the operation bit 632 of the pointer.

Referring to 603, when a request is made to release a specific memory address from the process or the pointer, if the identified operation bit is set to the second bit (e.g., "1"), the electronic device 101, under the control of the processor 120, may identify whether the specific memory address corresponds to the start address and the end address for memory allocation and identify valid information based on the 3-tuple stored in the lookup table, and may release memory usage by changing the valid information to invalid (e.g., "0).

Referring to 603, when a request is made to release a specific memory address from the process or the pointer, if the identified operation bit is set to the second bit (e.g., "1"), the instructions stored in the memory 130, when executed by the processor 120, may cause the electronic device 101 to identify whether the specific memory address corresponds to the start address and the end address for memory allocation and identify valid information based on the 3-tuple stored in the lookup table, and may release memory usage by changing the valid information to invalid (e.g., "0).

In an embodiment, the electronic device 101 may include the processor 120 and the memory 130 for storing instructions, wherein the instructions, when executed by the processor 120, may cause the electronic device 101 to identify whether all specific bits of a pointer are available when there is a memory allocation request from a process, identify whether there is a selectable tag exists in a lookup table including indices of tags when at least some of the specific bits of the pointer are unavailable, select the tag when there is a selectable tag, based on the selected tag, configure a 3-tuple based on a start address, an end address, and valid information for memory allocation and store the 3-tuple in the lookup table, set an operation bit to a first bit, and store the tag and the operation bit in a first area of the pointer and store the start address in a second area of the pointer to allocate memory.

In an embodiment, instructions, when executed by the processor 120, may cause the electronic device 101 to select again the tag when there is no selectable tag, configure and store a 3-tuple based on a start address, an end address, and the tag for memory allocation based on the selected tag and store the 3-tuple in a specific tree, set the operation bit to a second bit, and store the tag and the operation bit in a first area of the pointer and store the start address in a second area of the pointer to allocate memory.

In an embodiment, instructions, when executed by the processor 120, may cause the electronic device 101 to identify the operation bit of the pointer when the pointer attempts to access a specific memory address, when the operation bit is set to the first bit, identify whether the specific memory address corresponds to a start address and an end address for memory allocation based on the 3-tuple stored in the lookup table and identify the valid information, and determine whether there is a memory safety violation by identifying whether the specific memory address corresponds to the start address and the end address for memory allocation and identifying the valid information.

In an embodiment, instructions, when executed by the processor 120, may cause the electronic device 101 to identify the operation bit of the pointer when the pointer attempts to access a specific memory address, and determine whether there is a memory safety violation by identifying whether the tag and the start address and end address for memory allocation correspond to a cache tuple when the operation bit is set to the second bit.

In an embodiment, instructions, when executed by the processor 120, may cause the electronic device 101 to determine whether there is a memory safety violation by identifying whether the tag and the start address and end address for memory allocation correspond to the specific tree when the tag and the start address and end address for memory allocation do not correspond to the cache tuple.

In an embodiment, instructions, when executed by the processor 120, may cause the electronic device 101 to identify the operation bit of the pointer when a request is made to release the specific memory address, and when the operation bit is set to the first bit, identify whether the specific memory address corresponds to a start address and an end address for memory allocation and identify the valid information based on the 3-tuple stored in the lookup table, and change the valid information to invalid.

In an embodiment, instructions, when executed by the processor 120, may cause the electronic device 101 to identify the operation bit of the pointer when a request is made to release the specific memory address, and when the operation bit is set to the second bit, release the tuple of the specific tree and the cache tuple based on a start address, an end address, and the tag for memory allocation.

In an embodiment, instructions, when executed by the processor 120, may cause the electronic device 101 to identify whether the sum of the memory allocation size and the random offset size is smaller than a specific size when all specific bits of the pointer are available, set the operation bit to a first bit when the sum of the memory allocation size and the random offset size is smaller than a specific size, configure a 3-tuple in a header based on a start address, an end address, and the tag for memory allocation and store the 3-tuple in the pointer, and allocate memory by designating a value obtained by adding a random offset to the location of the header as the start address.

In an embodiment, instructions, when executed by the processor 120, may cause the electronic device 101 to set the operation bit to a second bit when the sum of the memory allocation size and the random offset size is greater than or equal to a specific size and based on the selected tag, configure a 3-tuple based on a start address, an end address, and valid information for memory allocation and allocate memory.

In an embodiment, instructions, when executed by the processor 120, may cause the electronic device 101 to identify the operation bit of the pointer when the pointer attempts to access a specific memory address, identify the location of the header when the operation bit is set to the first bit, identify whether the specific memory address corresponds to a start address and an end address included in the header for memory allocation, and identify the tag, and determine whether there is a memory safety violation by identifying whether the specific memory address corresponds to a start address and an end address for memory allocation and identifying the tag.

In an embodiment, instructions, when executed by the processor 120, may cause the electronic device 101 to:

identify the operation bit of the pointer when the pointer attempts to access a specific memory address and when the operation bit is set to the second bit; and determine whether there is a memory safety violation by identifying whether the valid information and a start address and an end address for memory allocation are valid.

In an embodiment, instructions, when executed by the processor 120, may cause the electronic device 101 to identify the operation bit of the pointer when a request is made to release the specific memory address and when the operation bit is set to the first bit, change the valid information to invalid based on a start address, an end address, and the tag for memory allocation included in the header.

In an embodiment, instructions, when executed by the processor 120, may cause the electronic device 101 to identify the operation bit of the pointer when a request is made to release the specific memory address, identify whether the specific memory address corresponds to a start address and an end address for memory allocation included in the header, identify the valid information, and change the valid information to invalid.

In an embodiment, a memory management method may include identifying whether all specific bits of a pointer are available when there is a memory allocation request from a process; identifying whether there is a selectable tag in a lookup table including indices of tags when at least some of the specific bits of the pointer are unavailable; selecting the tag when there is a selectable tag; based on the selected tag, configuring a 3-tuple based on a start address, an end address, and valid information for memory allocation and storing the 3-tuple in the lookup table; setting an operation bit to a first bit; and storing the tag and the operation bit in a first area of the pointer and storing the start address in a second area of the pointer to allocate memory.

In an embodiment, a memory management method may include selecting again the tag when there is no selectable tag; based on the selected tag, configuring and storing a 3-tuple based on a start address, an end address, and the tag for memory allocation and storing the 3-tuple in a specific tree; setting the operation bit to a second bit; and storing the tag and the operation bit in a first area of the pointer and storing the start address in a second area of the pointer to allocate memory.

In an embodiment, a memory management method may include identifying the operation bit of the pointer when the pointer attempts to access a specific memory address; when the operation bit is set to the first bit, identifying whether the specific memory address corresponds to a start address and an end address for memory allocation based on the 3-tuple stored in the lookup table and identifying the valid information; and determining whether there is a memory safety violation by identifying whether the specific memory address corresponds to the start address and the end address for memory allocation and identifying the valid information.

In an embodiment, a memory management method may include identifying the operation bit of the pointer when the pointer attempts to access a specific memory address; and when the operation bit is set to the second bit, determining whether there is a memory safety violation by identifying whether the tag and the start address and end address for memory allocation correspond to a cache tuple.

In an embodiment, a memory management method may include identifying whether the sum of the memory allocation size and the random offset size is smaller than a specific size when all specific bits of the pointer are available; setting the operation bit to a first bit when the sum of the memory allocation size and the random offset size is smaller than a specific size; and configuring a 3-tuple in a header based on a start address, an end address, and the tag for memory allocation and storing the 3-tuple in the pointer and allocating memory by designating a value obtained by adding a random offset to the location of the header as the start address.

In an embodiment, a memory management method may include setting the operation bit to a second bit when the sum of the memory allocation size and the random offset size is greater than or equal to a specific size; and based on the selected tag, configuring a 3-tuple based on a start address, an end address, and valid information for memory allocation and allocating memory.

In an embodiment, a memory management method may include identifying the operation bit of the pointer when the pointer attempts to access a specific memory address; when the operation bit is set to the first bit, identifying the location of the header, identifying whether the specific memory address corresponds to a start address and an end address included in the header for memory allocation, and identifying the tag and determining whether there is a memory safety violation by identifying whether the specific memory address corresponds to a start address and an end address for memory allocation and identifying the tag; and when the operation bit is set to the second bit, determining whether there is a memory safety violation by identifying whether the valid information and a start address and an end address for memory allocation are valid.

The electronic device according to various embodiments set forth herein may be any of various types of devices. The electronic devices may include, for example, a portable communication device (e.g., a smartphone), a computer device, a portable multimedia device, a portable medical device, a camera, a wearable device, or a home appliance. The electronic device according to the embodiments set forth herein is not limited to the above-described devices.

It is to be understood that various embodiments of the disclosure and terms for describing the embodiments are not intended to limit the technical features disclosed herein to specific embodiments, and that the embodiments include various modifications, equivalents, or alternatives of the corresponding embodiments. In relation to the description of the drawings, similar reference numerals may be used for similar or related components. The singular form of a noun corresponding to an item may include one item or a plurality of items unless the context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

The term "module" used in various embodiments of the disclosure may include a unit implemented in hardware, software, or firmware, and may be used interchangeably with terms such as "logic," "logic block," "component," "circuit," or the like. The module may be an integrally configured component or a minimum unit or a portion of the component, which performs one or more functions. For example, according to an embodiment, the module may be implemented in the form of an application-specific integrated circuit (ASIC).

Various embodiments disclosed herein may be implemented by software (e.g., the program 140) including one or more instructions stored in a storage medium (e.g., internal memory 136 or external memory 138) readable by a machine (e.g., an electronic device 101). For example, a processor (e.g., the processor 120) of a device (e.g., the electronic device 101) may invoke and execute at least one of the stored one or more instructions from the storage medium. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, a method according to various embodiments set forth herein may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{TM}) or directly between two user devices (e.g., smartphones), or may be distributed online (e.g., downloaded or uploaded). If distributed online, at least part of the computer program product may be temporarily stored or produced in a machine-readable storage medium such as a manufacturer's server, a server of an application store, or the memory of a relay server.

According to various embodiments, each component (e.g., a module or a program) of the above-described components may include a single entity or multiple entities, and some of the multiple entities may be separately disposed in different components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by a module, a program, or other components may be executed sequentially, in parallel, repetitively, or heuristically, one or more of the operations may be executed in a different order or omitted, or one or more other operations may be added.

## Claims

1. An electronic device comprising:
a processor; and
a memory storing instructions,
wherein the instructions, when executed by the processor, cause the electronic device to:
in case that there is a memory allocation request from a process, identify whether all specific bits of a pointer are available;
identify whether there is a selectable tag in a lookup table including indices of tags in case that at least some of the specific bits of the pointer are unavailable;
select the tag in case that there is a selectable tag;
based on the selected tag, configure a 3-tuple based on a start address, an end address, and valid information for memory allocation and store the 3-tuple in the lookup table;
set an operation bit to a first bit; and
store the tag and the operation bit in a first area of the pointer and store the start address in a second area of the pointer to allocate memory.

2. The electronic device of claim 1,
wherein the instructions, when executed by the processor, cause the electronic device to:
select again the tag in case that there is no selectable tag;
based on the selected tag, configure and store a 3-tuple based on a start address, an end address, and the tag for memory allocation and store the 3-tuple in a specific tree;
set the operation bit to a second bit; and
store the tag and the operation bit in a first area of the pointer and store the start address in a second area of the pointer to allocate memory.

3. The electronic device of claim 1,
wherein the instructions, when executed by the processor, cause the electronic device to:
identify the operation bit of the pointer in case that the pointer attempts to access a specific memory address;
in case that the operation bit is set to the first bit, identify whether the specific memory address corresponds to a start address and an end address for memory allocation based on the 3-tuple stored in the lookup table and identify the valid information; and
determine whether there is a memory safety violation by identifying whether the specific memory address corresponds to the start address and the end address for memory allocation and identifying the valid information.

4. The electronic device of claim 2,
wherein the instructions, when executed by the processor, cause the electronic device to:
identify the operation bit of the pointer in case that the pointer attempts to access a specific memory address;
in case that the operation bit is set to the second bit, determine whether there is a memory safety violation by identifying whether the tag and the start address and end address for memory allocation correspond to a cache tuple; and
in case that the tag and the start address and end address for memory allocation do not correspond to the cache tuple, determine whether there is a memory safety violation by identifying whether the tag and the start address and end address for memory allocation correspond to the specific tree.

5. The electronic device of claim 2,
wherein the instructions, when executed by the processor, cause the electronic device to:
identify the operation bit of the pointer in case that a request is made to release the specific memory address;
in case that the operation bit is set to the first bit, identify whether the specific memory address corresponds to a start address and an end address for memory allocation and identify the valid information based on the 3-tuple stored in the lookup table, and change the valid information to invalid.

6. The electronic device of claim 2,
wherein the instructions, when executed by the processor, cause the electronic device to:
identify the operation bit of the pointer in case that a request is made to release the specific memory address;
in case that the operation bit is set to the second bit, release the tuple of the specific tree and the cache tuple based on a start address, an end address, and the tag for memory allocation.

7. The electronic device of claim 1,
wherein the instructions, when executed by the processor, cause the electronic device to:
identify whether the sum of the memory allocation size and the random offset size is smaller than a specific size in case that all specific bits of the pointer are available;
set the operation bit to a first bit in case that the sum of the memory allocation size and the random offset size is smaller than a specific size;
configure a 3-tuple in a header based on a start address, an end address, and the tag for memory allocation and store the 3-tuple in the pointer;
allocate memory by designating a value obtained by adding a random offset to the location of the header as the start address;
set the operation bit to a second bit in case that the sum of the memory allocation size and the random offset size is greater than or equal to a specific size; and
based on the selected tag, configure a 3-tuple based on a start address, an end address, and valid information for memory allocation and allocate memory.

8. The electronic device of claim 7,
wherein the instructions, when executed by the processor, cause the electronic device to:
identify the operation bit of the pointer in case that the pointer attempts to access a specific memory address;
in case that the operation bit is set to the first bit, identify the location of the header, identify whether the specific memory address corresponds to a start address and an end address included in the header for memory allocation, and identify the tag; and
determine whether there is a memory safety violation by identifying whether the specific memory address corresponds to a start address and an end address for memory allocation and identifying the tag.

9. The electronic device of claim 7,
wherein the instructions, when executed by the processor, cause the electronic device to:
identify the operation bit of the pointer in case that the pointer attempts to access a specific memory address; and
in case that the operation bit is set to the second bit, determine whether there is a memory safety violation by identifying whether the valid information and a start address and an end address for memory allocation are valid.

10. The electronic device of claim 7,
wherein the instructions, when executed by the processor, cause the electronic device to:
identify the operation bit of the pointer in case that a request is made to release the specific memory address;
in case that the operation bit is set to the first bit, change the valid information to invalid based on a start address, an end address, and the tag for memory allocation included in the header.

11. The electronic device of claim 7,
wherein the instructions, when executed by the processor, cause the electronic device to:
identify the operation bit of the pointer in case that a request is made to release the specific memory address;
identify whether the specific memory address corresponds to a start address and an end address for memory allocation included in the header, identify the valid information, and change the valid information to invalid.

12. A memory management method comprising:
in case that there is a memory allocation request from a process, identifying whether all specific bits of a pointer are available;
identifying whether there is a selectable tag in a lookup table including indices of tags in case that at least some of the specific bits of the pointer are unavailable;
selecting the tag in case that there is a selectable tag;
based on the selected tag, configuring a 3-tuple based on a start address, an end address, and valid information for memory allocation and storing the 3-tuple in the lookup table;
setting an operation bit to a first bit; and
storing the tag and the operation bit in a first area of the pointer and storing the start address in a second area of the pointer to allocate memory.

13. The method of claim 12, further comprising:
selecting again the tag in case that there is no selectable tag;
based on the selected tag, configuring and storing a 3-tuple based on a start address, an end address, and the tag for memory allocation and storing the 3-tuple in a specific tree;
setting the operation bit to a second bit; and
storing the tag and the operation bit in a first area of the pointer and storing the start address in a second area of the pointer to allocate memory.

14. The method of claim 13, further comprising:
identifying the operation bit of the pointer in case that the pointer attempts to access a specific memory address;
in case that the operation bit is set to the first bit, identifying whether the specific memory address corresponds to a start address and an end address for memory allocation based on the 3-tuple stored in the lookup table and identifying the valid information;
determining whether there is a memory safety violation by identifying whether the specific memory address corresponds to the start address and the end address for memory allocation and identifying the valid information; and
in case that the operation bit is set to the second bit, determining whether there is a memory safety violation by identifying whether the tag and the start address and end address for memory allocation correspond to a cache tuple.

15. The method of claim 12, further comprising:
identifying whether the sum of the memory allocation size and the random offset size is smaller than a specific size in case that all specific bits of the pointer are available;
setting the operation bit to a first bit in case that the sum of the memory allocation size and the random offset size is smaller than a specific size;
configuring a 3-tuple in a header based on a start address, an end address, and the tag for memory allocation and storing the 3-tuple in the pointer;
allocating memory by designating a value obtained by adding a random offset to the location of the header as the start address;
setting the operation bit to a second bit in case that the sum of the memory allocation size and the random offset size is greater than or equal to a specific size;
based on the selected tag, configuring a 3-tuple based on a start address, an end address, and valid information for memory allocation and allocating memory;
identifying the operation bit of the pointer in case that the pointer attempts to access a specific memory address;
in case that the operation bit is set to the first bit, identifying the location of the header, identifying whether the specific memory address corresponds to a start address and an end address included in the header for memory allocation, and identifying the tag;
determining whether there is a memory safety violation by identifying whether the specific memory address corresponds to a start address and an end address for memory allocation and identifying the tag; and
in case that the operation bit is set to the second bit, determining whether there is a memory safety violation by identifying whether the valid information and a start address and an end address for memory allocation are valid.
